(19) Europäisches Patentamt
European Patent Office
Office européen des brevets

(11) EP 2 857 371 A1

(12) **EUROPEAN PATENT APPLICATION**
published in accordance with Art. 153(4) EPC

(43) Date of publication:
**08.04.2015 Bulletin 2015/15**

(21) Application number: **12877940.2**

(22) Date of filing: **26.11.2012**

(51) Int Cl.:
***C03C 17/42*** $^{(2006.01)}$ ***A61J 1/05*** $^{(2006.01)}$

(86) International application number:
**PCT/JP2012/080475**

(87) International publication number:
**WO 2013/179514 (05.12.2013 Gazette 2013/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.05.2012 JP 2012120559**

(71) Applicant: **Namicos Corporation**
**Osaka 540-0037 (JP)**

(72) Inventors:
- **BAMBA, Takao**
**Osaka-shi**
**Osaka 540-0037 (JP)**
- **ARAMATA, Masafumi**
**Osaka-shi**
**Osaka 540-0037 (JP)**
- **KISHIMOTO, Jotaro**
**Osaka-shi**
**Osaka 540-0037 (JP)**

(74) Representative: **Held, Stephan et al**
**Meissner, Bolte & Partner GbR**
**Widenmayerstraße 47**
**80538 München (DE)**

(54) **GLASS CONTAINER AND METHOD FOR MANUFACTURING SAME**

(57) This invention provides a glass container (in particular, a medical glass container) that is excellent in water repellency, powder repellency, heat resistance, water resistance, alkali resistance, etc., and a method for producing the container.

This invention relates to a method for producing a glass container (in particular, a medical glass container), the method comprising the steps of (1) treating the inner surface of a glass container with a silane coupling agent and/or a partial hydrolysate thereof and (2) treating the treated surface obtained in step (1) with an amorphous fluorine-containing resin. The invention also relates to a glass container obtained by using the production method.

EP 2 857 371 A1

## Description

Technical Field

The present invention relates to a glass container, in particular to a medical glass container, and more specifically to a glass container for containing a chemical such as a pharmaceutical product or a testing reagent.

Background Art

Glass containers with excellent barrier properties against steam, oxygen, etc., are widely used as medical containers for containing a chemical such as a pharmaceutical product or a testing reagent. From the viewpoint of cost and processability, borosilicate glass, soda-lime glass, or the like glass is typically used as a material for such glass containers. However, there are problems such as the content tending to adhere to the inner surface of a glass container (water repellency and powder repellency of the surface being low), modifier ions (such as sodium ion) contained in glass being eluted, and the inner surface of a glass container being eroded and thereby generating glass flakes when a pharmaceutical solution having a high pH is contained in the container. To solve these problems, many inner-surface-treated medical glass containers have been reported (for example, Patent Literature 1 to 4).

In addition, it is typically necessary to subject medical glass containers (e.g., glass vials) to "dry heat sterilization," which is performed by heating to 250°C to inactivate pyrogens (pyrogenous substance: cell wall of Gram-negative bacteria) after the containers are washed with distilled water for injection. Thus, surface treatment that enables glass containers to sufficiently withstand dry heat sterilization is required.

Citation List

Patent Literature

PTL 1: JPS54-097617A
PTL 2: JP2008-006587A
PTL 3: JP2011-523866A
PTL 4: JP2815595B

Summary of Invention

Technical Problem

An object of the present invention is to provide a glass container (in particular, a medical glass container) that is excellent in water repellency, powder repellency, heat resistance, water resistance, alkali resistance, etc., and that does not elute glass modifier ions, and to provide a method for producing the container.

Solution to Problem

The present inventors conducted extensive research to solve the above problems and found that a glass container (in particular, a medical glass container) that can solve the problems can be produced by applying a silane coupling agent and/or a partial hydrolysate thereof to the inner surface of a glass container and applying an amorphous fluorine-containing resin to the resulting inner surface. The present inventors further conducted research based on this finding and accomplished the present invention.

Specifically, the present invention provides a medical glass container and a method for producing the container as follows.

Item 1. A method for producing a glass container, the method comprising the steps of:

(1) treating the inner surface of a glass container with a silane coupling agent and/or a partial hydrolysate thereof; and
(2) treating the treated surface obtained in step (1) with an amorphous fluorine-containing resin.

Item 2. The method according to Item 1, wherein the silane coupling agent is a compound represented by formula (A):

$(R^1O)_{4-n}SiR^2_n$ (A)

wherein n represents 1, 2, or 3, $R^1$ represents a lower alkyl group, and $R^2$ represents a lower alkyl group that may be substituted with an amino group or an amino-lower alkylamino group.

Item 3. The method according to Item 2, wherein the silane coupling agent is a compound represented by formula (A), wherein n represents 1, $R^1$ represents a $C_{1-3}$ alkyl group, and $R^2$ represents a $C_{2-6}$ alkyl group that may be substituted with an amino group or an amino-$C_{2-4}$ alkylamino group.

Item 4. The method according to any one of Items 1 to 3, wherein the amorphous fluorine-containing resin comprises repeating units of a fluorine-containing cyclic ether structure.

Item 5. The method according to Item 4, wherein the amorphous fluorine-containing resin comprises repeating units represented by formula (B):

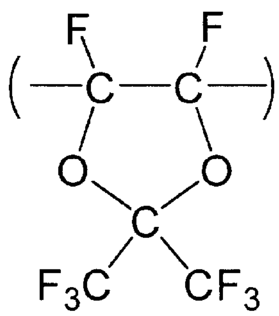

(B)

Item 6. The method according to Item 5, wherein the amorphous fluorine-containing resin comprises 60 to 99 mol% repeating units represented by formula (B) and 40 to 1 mol% repeating units represented by formula (B1):

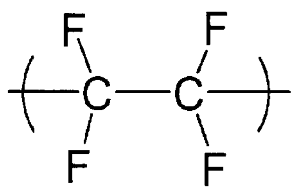

(B1)

Item 7. The method according to Item 4, wherein the amorphous fluorine-containing resin comprises repeating units represented by formula (C) and/or formula (D):

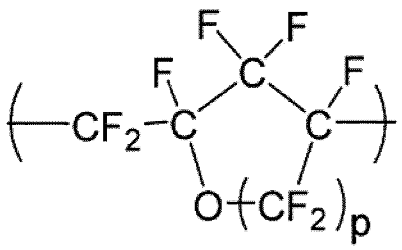

and/or

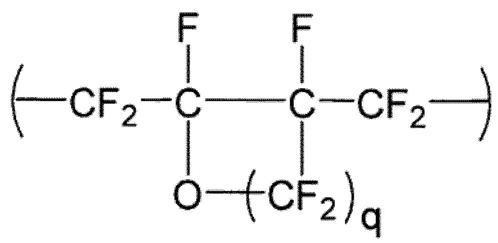

(C) (D)

wherein p represents 1 or 2, and q represents 1 or 2.

Item 8. The method according to Item 7, wherein the amorphous fluorine-containing resin comprising repeating units represented by formula (C) and/or formula (D) has one or more carboxyl-containing substituents, or one or more substituents containing a moiety represented by formula (E):

$$-CONH-R^3-Si(OR^4)_3 \quad (E)$$

wherein $R^3$ represents a linker, and $R^4$ represents a lower alkyl group.

Item 9. The method according to Item 8, wherein the amorphous fluorine-containing resin comprising repeating units represented by formula (C) and/or formula (D) is terminated with a substituent containing a moiety represented by formula (E).

Item 10. The method according to any one of Items 1 to 9, wherein the glass container is made of borosilicate glass.

Item 11. The method according to any one of Items 1 to 10, wherein the coating film obtained by carrying out steps (1) and (2) has a thickness of about 0.1 to about 300 μm.

Item 12. A glass container obtained by the method according to any one of Items 1 to 11.

Item 13. The glass container according to Item 12, which is a medical glass container.

Item 14. A medical glass container containing a chemical, wherein a pharmaceutical product or a testing reagent is contained in the medical glass container according to Item 13.

## Advantageous Effects of Invention

The glass container of the present invention has excellent water repellency, powder repellency, heat resistance, water resistance, alkali resistance, delamination resistance, etc. The glass container of the present invention also does not elute glass modifier ions or generate glass flakes. Additionally, little eluting of fluorine ion occurs.

Further, pharmaceutical products containing proteins, nucleic acids, etc., have been developed in recent years. Such pharmaceutical products have a high affinity to glass; therefore, a problem of reduction in titer caused by adsorption to the inner surface of a container has been pointed out. The glass container of the present invention also attains the effect of reducing adsorption of such pharmaceutical products.

As described above, the glass container of the present invention is excellent in handling, durability, storage stability of the content, etc., and thus can stably contain various pharmaceutical products and testing reagents. Accordingly, the glass container of the present invention is useful as a medical glass container.

## Brief Description of Drawings

Fig. 1 is photographs showing the condition of "A: Water repellency of the inner surface of the vial is uniform" (Fig. 1(a)) and the condition of "C: Water repellency of the inner surface of the vial is not uniform" (Fig. 1(b)) in (2) Evaluation of Water Repellency in Test Example 1.

Fig. 2 is photographs showing the condition of "A: Almost no powder adheres to the inner surface of the vial" (Fig. 2(a)) and the condition of "C: A large amount of powder adheres to the inner surface of the vial" (Fig. 2(b)) in (3) Evaluation of Powder Repellency in Test Example 1.

Fig. 3-1 is photographs showing the condition of "no film peeling" (Fig. 3-1(a)) and the condition of "Film peeling" (Fig. 3-1(b)) in (4) Evaluation of Dry Heat Durability, (6) Evaluation of Hot-water Resistance, and (7) Evaluation of Alkali Resistance in Test Example 1.

Fig. 3-2 is photographs showing the condition of "Good water repellency" (Fig. 3-2(c)) and the condition of "poor water repellency" (Fig. 3-2(d)) in (4) Evaluation of Dry Heat Durability, (6) Evaluation of Hot-water Resistance, and (7) Evaluation of Alkali Resistance in Test Example 1.

Fig. 4 is a photograph showing a cross section of the upper portion of the body of the coated vial produced in Example 1.

Fig. 5 shows the results (photographs) of the contact angle of water on the coating film of each coated vial measured in Test Example 2 ((a) surface-treated vial of Example 1 (coated vial 1), (b) vial obtained after subjecting coated vial 1 to peeling, (c) vial obtained after subjecting coated vial 2 to peeling, and (d) vial obtained after subjecting coated vial 3 to peeling).

Fig. 6 is a calibration curve showing the relationship between the concentration of BSA in the solution and the absorbance in Test Example 4.

Fig. 7 shows the measurement results of the absorbance of each sample in Test Example 4.

Fig. 8 shows the percentage of BSA remaining in each sample in Test Example 4.

## Description of Embodiments

The glass container (in particular, medical glass container) of the present invention is produced by using a

production method comprising the steps of (1) treating the inner surface of a glass container with a silane coupling agent and/or a partial hydrolysate thereof, and (2) treating the treated surface obtained in step (1) with an amorphous fluorine-containing resin. This medical glass container is excellent in water repellency, powder repellency, heat resistance, water resistance, alkali resistance, delamination resistance, etc., and does not elute glass modifier ions or generate glass flakes.

A method for producing the inner-surface-treated glass container (in particular, medical glass container) of the present invention is described below.

Step (1)

In step (1), the inner surface of a glass container is treated with a silane coupling agent and/or a partial hydrolysate thereof.

There is no particular limitation on the glass container of the present invention, and in particular, a medical glass container can be given as an example. The medical glass container is a glass container for containing a pharmaceutical product, a testing reagent, etc. Examples include ampoules, vials, syringes, and the like. A material for the glass container is not particularly limited as long as the object of the present invention is achieved. A wide variety of materials are usable. Examples include quartz glass, borosilicate glass, soda-lime glass, and the like. Of these, borosilicate glass is preferable from the viewpoint of, for example, processability and chemical stability.

The glass container may be subjected to preparatory surface treatment before being subjected to the production method of the present invention, if necessary. Examples of preparatory surface treatment include alkali treatment (e.g., treatment with aqueous sodium hydroxide solution, etc.) and acid treatment (e.g., treatment with hydrochloric acid, etc.).

Examples of silane coupling agents include compounds represented by formula (A):

$$(R^1O)_{4-n}SiR^2_n \qquad (A)$$

wherein n represents 1, 2, or 3, $R^1$ represents a lower alkyl group, and $R^2$ represents a lower alkyl group that may be substituted with an amino group or an amino-lower alkylamino group.

n is 1, 2, or 3, and n is preferably 1.

Examples of lower alkyl groups represented by $R^1$ include straight or branched $C_{1-6}$ alkyl groups. The lower alkyl group represented by $R^1$ is preferably a straight or branched $C_{1-4}$ alkyl group, such as methyl, ethyl, n-propyl, isopropyl, or n-butyl group, more preferably a $C_{1-3}$ alkyl group, and particularly preferably methyl or ethyl group.

In formula (A), when a plurality of $(R^1O)$s are present (when n is 1 or 2), $R^1$s may be the same or different.

Examples of lower alkyl groups, represented by $R^2$, that may be substituted with an amino group or an amino-lower alkylamino group include $C_{2-6}$ alkyl groups that may be substituted with an amino group or an amino-$C_{2-4}$ alkylamino group. Specific examples include groups represented by formula (A1):

$$-R^{20} \qquad (A1)$$

wherein $R^{20}$ represents a straight or branched $C_{2-6}$ alkyl group; groups represented by formula (A2):

$$-R^{21}-NH_2 \qquad (A2)$$

wherein $R^{21}$ represents a straight or branched $C_{2-6}$ alkylene group, and preferably trimethylene group; and groups represented by formula (A3):

$$-R^{22}-NH-R^{23}-NH_2 \qquad (A3)$$

wherein $R^{22}$ represents a straight or branched $C_{2-6}$ alkylene group, and $R^{23}$ represents a straight or branched $C_{2-4}$ alkylene group.

$R^2$ is preferably a group represented by formula (A1) or a group represented by formula (A2), and more preferably a group represented by formula (A2). This is because the transparency of the inner surface of the glass container is effectively maintained (i.e., the inner surface of the glass container is not whitened) in the heating in step (2) when a compound in which $R^2$ is a group represented by formula (A2) is used.

In formula (A), when a plurality of $R^2$s are present (when n is 2 or 3), $R^2$s may be the same or different.

Preferable examples of silane coupling agents include compounds represented by formula (A'):

$$(R^1O)_3SiR^2 \qquad (A')$$

wherein $R^1$ and $R^2$ are the same as described above.

Specific examples of silane coupling agents include methyltrimethoxysilane, methyltriethoxysilane, ethyltrimethoxysilane, ethyltriethoxysilane, 3-aminopropyltrimethoxysilane, 3-aminopropyltriethoxysilane, 3-aminopropylmethyldimethoxysilane, 3-aminopropylmethyldiethoxysilane, 2-aminoethyl-3-aminopropyltrimethoxysilane, 2-aminoethyl-3-aminopropyltriethoxysilane, 2-aminoethyl-3-aminopropylmethyldimethoxysilane, 2-aminoethyl-3-aminopropylmethyldiethoxysilane, 2-aminoethyltrimethoxysilane, 2-aminoethyltriethoxysilane, 4-aminobutyltrimethoxysilane, 4-aminobutyltriethoxysilane, and the like. These silane coupling agents may be used singly or in a combination of two or more.

Among the above silane coupling agents, preferable specific examples of silane coupling agents are methyltrimethoxysilane, methyltriethoxysilane, 3-aminopropyltrimethoxysilane, 3-aminoethyltrimethoxysilane, and 3-aminopropyltriethoxysilane. In particular, 3-aminopropyltriethoxysilane is preferable.

The partial hydrolysate of the silane coupling agent can be obtained by hydrolysis of the silane coupling agent in the presence of water. The partial hydrolysate of the silane coupling agent can be typically produced by reacting the silane coupling agent with a predetermined amount of water in the presence of an acid catalyst such as acetic acid.

The silane coupling agent and/or a partial hydrolysate thereof is typically used in the form of a solution. The solution can be prepared by diluting the silane coupling agent with, for example, water or a mixed solvent of water and an alcohol and, if necessary, using an acid catalyst such as acetic acid. The concentration of the silane coupling agent is typically 0.1 to 10% by mass, preferably 0.2 to 5% by mass, and more preferably 0.4 to 3% by mass. Examples of alcohols include $C_{1-3}$ alcohols, such as methanol, ethanol, propanol, and isopropyl alcohol.

The solution containing the silane coupling agent and/or a partial hydrolysate thereof may contain, for example, an alkoxide of metal such as silicon, titanium, or zirconium (e.g., tetraalkoxysilane), a silane coupling agent other than the above silane coupling agents, and/or a partial hydrolysate thereof within the range that achieves the effect of the present invention, if necessary.

There is no particular limitation on the method for treating the inner surface of a glass container with the solution containing the silane coupling agent and/or a partial hydrolysate thereof. For example, a known coating method such as dipping, spraying, brush coating, or a method in which the solution is poured into a container and the container is spin-coated, can be used. After the solution is applied to the inner surface of the glass container, if necessary, excess solution is removed by centrifugation or the like. The inner surface is then dried. The drying step is typically performed at a temperature of about room temperature to about 150°C for about 1 to about 60 minutes. Thereafter, it is preferable to further perform heating (baking). The heating is typically performed at a temperature of about 80 to about 250°C (preferably about 80 to about 200°C) for about 5 to about 100 minutes (preferably about 10 minutes to about 60 minutes).

The glass container, the inner surface of which is treated with the silane coupling agent and/or a partial hydrolysate thereof, is obtained as described above. The thickness of the film obtained in step (1) is typically about 0.001 to about 0.5 μm, and preferably 0.01 to 0.1 μm.

Step (2)

In step (2), the treated surface obtained in step (1) is treated with an amorphous fluorine-containing resin.

Examples of amorphous fluorine-containing resins include amorphous fluorine-containing resins each comprising repeating units of a fluorine-containing cyclic ether structure in a molecule. Specific examples include amorphous fluorine-containing resins comprising repeating units represented by formula (B):

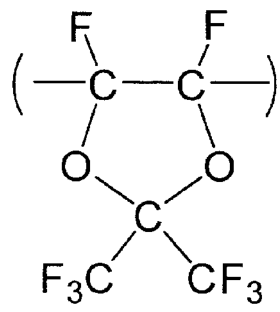

(B)

and amorphous fluorine-containing resins comprising repeating units represented by formula (C) and/or formula (D):

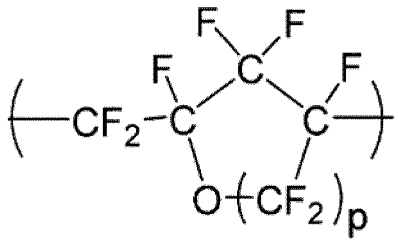

(C)

and/or

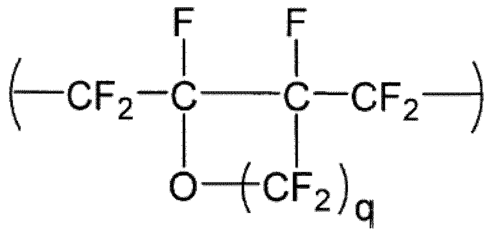

(D)

wherein p represents 1 or 2, and q represents 1 or 2.

The amorphous fluorine-containing resin comprising repeating units represented by formula (B) is, for example, an amorphous copolymer of perfluoro-2,2-dimethyl-1,3-dioxole (2,2-bistrifluoromethyl-4,5-difluoro-1,3-dioxole) and at least one comonomer selected from the group consisting of the following compounds:

a) tetrafluoroethylene,
b) chlorotrifluoroethylene,
c) vinylidene fluoride,
d) hexafluoropropylene,
e) trifluoroethylene,
f) perfluoroalkyl vinyl ethers of formula $CF_2$=$CFOR_F$, wherein $R_F$ is a n-perfluoroalkyl group having 1 to 3 carbon atoms,
g) fluorovinyl ethers of formula $CF_2$=CFOQZ, wherein Q is a perfluorinated alkylene group containing 0 to 5 ether oxygen atoms, where the total number of the C and O atoms in Q is 2 to 10; Z is a group selected from the group consisting of -COOR,-$SO_2$F, -CN, -COF, and -$OCH_3$, where R is a $C_{1-4}$ alkyl group,
h) vinyl fluoride ($CH_2$=CHF), and
i) (perfluoroalkyl) ethylenes of formula $R_f$CH=$CH_2$, wherein $R_f$ is a $C_{1-8}$ n-perfluoroalkyl group.

Among a) to i) above, a) tetrafluoroethylene is preferable.

2,2-bistrifluoromethyl-4,5-difluoro-1,3-dioxole is present in an amount of typically 60 to 99 mol%, preferably 65 to 99 mol%, and more preferably 65 to 90 mol%, based on the total amount of monomers forming the amorphous copolymer. At least one comonomer selected from the group consisting of a) to i) above (in particular, a) tetrafluoroethylene) is present in an amount of typically 40 to 1 mol%, preferably 35 to 1 mol%, and more preferably 35 to 10 mol%, based on the total amount of monomers forming the amorphous copolymer.

The glass transition temperature of the amorphous copolymer is, for example, at least 140°C, preferably 145 to 320°C, and more preferably 150 to 280°C.

In particular, the amorphous copolymer is preferably a copolymer comprising 2,2-bistrifluoromethyl-4,5-difluoro-1,3-dioxole (PDD) and tetrafluoroethylene (TFE). The mole percentage of PDD and the mole percentage of TFE are preferably as described above. Specific examples include amorphous copolymers comprising repeating units represented by formula (B) in an amount of 60 to 99 mol%, preferably 65 to 99 mol%, and more preferably 65 to 90 mol% and repeating unites represented by formula (B1):

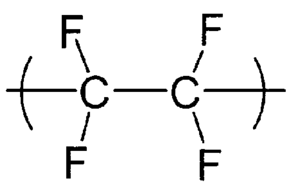

(B1)

in an amount of 40 to 1 mol%, preferably 35 to 1 mol%, and more preferably 35 to 10 mol%.

The amorphous fluorine-containing resin can be easily prepared by a person skilled in the art by following or in accordance with the method described in, for example, JP2615176B, JP2713867B, JP2981185B, JP3137609B, JP2003-514956A (WO 01/037044), or the like. Further, the amorphous fluorine-containing resin is commercially available.

Examples include Teflon AF (produced by Du Pont-Mitsui Fluorochemicals Co., Ltd.; Teflon is a registered trademark).

Examples of the amorphous fluorine-containing resin comprising repeating units represented by formula (C) and/or formula (D) include compounds consisting essentially of repeating units (a) represented by formula (C) and/or formula (D).

The amorphous fluorine-containing resin is, for example, a compound having a molecular weight corresponding to an intrinsic viscosity of at least 0.1. The molecular weight of the amorphous fluorine-containing resin is, for example, typically 50,000 to 500,000 and preferably 100,000 to 200,000.

The glass transition temperature of the amorphous fluorine-containing resin is, for example, at least 100°C, preferably 100 to 200°C, and more preferably 100 to 150°C.

Examples of the amorphous fluorine-containing resin include compounds comprising repeating units (a) derived from perfluoroallyl vinyl ether and/or perfluorobutenyl vinyl ether, and in particular compounds consisting essentially of repeating units (a) and repeating units (b) represented by formula:

$$-(CF_2\text{-}CFX)-$$

wherein X is selected from F, Cl, $-O-CF_2CF_2CF_3$, $-O-CF_2CF(CF_3)OCF_2CF_2SO_2F$, and $-O-CF_2CF_2CF_2COOCH_3$. In such a compound, repeating units (a) are present in an amount of 80 mol% or more, preferably 85 mol% or more, and more preferably 90 mol% or more, based on the total amount of monomers forming the amorphous copolymer.

In particular, repeating units (a) are preferably derived from perfluorobutenyl vinyl ether (especially perfluoro(4-vinyloxy-1-butene) (BVE)). More specifically, they are repeating units represented by formula (D) wherein q is 2.

The amorphous fluorine-containing resin is more preferably a compound obtained by cyclopolymerization of a monomer consisting essentially of perfluorobutenyl vinyl ether (especially perfluoro(4-vinyloxy-1-butene) (BVE)), and particularly preferably a compound obtained by cyclopolymerization of perfluorobutenyl vinyl ether (especially BVE).

The amorphous fluorine-containing resin comprising repeating units represented by formula (C) and/or formula (D) preferably further comprises one or more carboxyl(-COOH)-containing substituents, or one or more substituents containing a moiety represented by formula (E):

$$-CONH-R^3-Si(OR^4)_3 \qquad (E)$$

wherein $R^3$ represents a linker, and $R^4$ represents a lower alkyl group. The carboxyl-containing substituent or the substituent containing a moiety represented by formula (E) is preferably bonded to one or both terminals (in particular, both terminals) of the chain-like amorphous fluorine-containing resin.

The linker represented by $R^3$ is not particularly limited as long as it is a divalent group that can link silicon and a nitrogen atom. Examples include lower alkylene groups. The linker is preferably a straight or branched $C_{2-6}$ alkylene group, such as ethylene ($-CH_2CH_2-$), trimethylene ($-CH_2CH_2CH_2-$), tetramethylene ($-CH_2CH_2CH_2CH_2-$), or pentamethylene ($-CH_2CH_2CH_2CH_2CH_2-$) group, and more preferably trimethylene group.

Examples of lower alkyl groups represented by $R^4$ include straight or branched $C_{1-6}$ alkyl groups. The lower alkyl group represented by $R^4$ is preferably a straight or branched $C_{1-4}$ alkyl group, such as methyl, ethyl, n-propyl, isopropyl, or n-butyl group, and more preferably methyl or ethyl group.

Preferable examples of the moiety represented by formula (E) include $-CONH-(CH_2)_3-Si(OMe)_3$ and $-CONH-(CH_2)_3-Si(OEt)_3$.

Among the above amorphous fluorine-containing resins, a preferable example is an amorphous fluorine-containing resin comprising repeating units represented by formula (D) wherein q is 2. A more preferable example is an amorphous fluorine-containing resin that comprises repeating units represented by formula (D) wherein q is 2 and that comprises a substituent containing a moiety represented by formula (E) wherein $R^3$ represents trimethylene group, and $R^4$ represents methyl or ethyl group, at both terminals of the resin.

The amorphous fluorine-containing resin comprising repeating units represented by formula (C) and/or formula (D) can be easily prepared by a person skilled in the art by following or in accordance with the method described in, for example, JPH01-131215A, or the like. Further, the amorphous fluorine-containing resin is commercially available. Examples include Cytop type A, Cytop type M, and Cytop type S (produced by Asahi Glass Co., Ltd.). Cytop type A and Cytop type M are preferable, and Cytop type M is more preferable.

The amorphous fluorine-containing resin is used in the form of a solution. The solution can be prepared by diluting the amorphous fluorine-containing resin with a solvent. The solvent is not particularly limited as long as it can dissolve the amorphous fluorine-containing resin, and is preferably a fluorine-containing inert liquid. Known fluorine-containing inert liquids are usable. Examples include perfluorocarbons (such as FC-87, FC-72, FC-84, FC-3283, FC-40, FC-43, and FC-70) and mixtures thereof. Specific examples include 3M Fluorinert (produced by Sumitomo 3M Limited) and the like. The concentration of the amorphous fluorine-containing resin in the solution is typically 0.1 to 10% by mass, preferably 0.2 to 6% by mass, and more preferably 0.5 to 5% by mass.

The solution containing the amorphous fluorine-containing resin is applied to the inner surface of the glass container pretreated in step (1) described above. There is no particular limitation on the method for applying the solution. For example, a known coating method such as dipping, spraying, brush coating, or a method in which the solution is poured into a container and the container is spin-coated, can be used. After the solution is applied to the inner surface of the glass container, if necessary, excess solution is removed by centrifugation or the like. The inner surface is then dried. The drying step is typically performed at a temperature of about room temperature to about 150°C for about 1 to about 60 minutes. Thereafter, it is preferable to further perform heating (baking). The heating is typically performed at a temperature of about 150 to about 270°C (preferably about 200 to about 250°C) for about 5 to about 100 minutes (preferably about 20 to about 30 minutes).

The thickness of the amorphous fluorine-containing resin film obtained in step (2) is typically about 0.1 to about 300 μm, preferably 1 to 200 μm, more preferably about 5 to about 150 μm, and particularly preferably about 10 to about 150 μm.

The thickness of the coating film obtained by carrying out steps (1) and (2) is typically about 0.1 to about 300 μm, preferably 1 to 200 μm, more preferably about 5 to about 150 μm, and particularly preferably about 10 to about 150 μm.

The film thickness can be measured, for example, by cutting the glass container with a cutter or the like and observing a cut surface with a microscope.

The medical glass container of the present invention is produced as described above. This medical glass container has excellent water repellency, powder repellency, chemical stability and hot-water resistance because the inner surface of the container is coated with the amorphous fluorine-containing resin. Since the use of the silane coupling agent notably improves adhesion between the amorphous fluorine-containing resin and the glass surface, the medical glass container is also excellent in heat resistance, water resistance, alkali resistance, delamination resistance, etc. This is attributable to the anchor effect of the silane coupling agent, i.e., the effect of firmly attaching the amorphous fluorine-containing resin to the glass surface via the silane coupling agent (by hydrogen bond, covalent bond, or the like).

In particular, a film obtained by treating a glass surface with a silane coupling agent wherein $R^2$ is a group represented by formula (A2) or formula (A3) and then treating the treated surface with an amorphous fluorine-containing resin comprising repeating units represented by formula (B) is preferable. This is presumably because a strong anchor effect is obtained through electrostatic interaction between the amino groups having the positive charge (positive charge distribution) of the silane coupling agent and the cyclic ether moieties having the negative charge (negative charge distribution) of the amorphous fluorine-containing resin, as well as hydrophobic interaction between the group $R^{21}$, $R^{22}$, and/or $R^{23}$ of the silane coupling agent and the fluorohydrocarbon chains of the amorphous fluorine-containing resin.

As described above, the inner-surface-treated glass container of the present invention is useful as a medical glass container since it satisfies extremely high-level characteristics required for containing a chemical such as a pharmaceutical product or a testing reagent (for example, water repellency, powder repellency, heat resistance, water resistance, and alkali resistance; low adsorption of pharmaceutical products such as protein preparations; and the like). Examples of the form of the container include containers for injections such as vials, ampoules, and syringes.

There is no particular limitation on the preparation form of pharmaceutical products and testing reagents to be contained. Any forms such as liquid preparations, suspensions, emulsions, gel preparations, powder preparations, and freeze-dried preparations may be used. There is also no particular limitation on the types of pharmaceutical products and testing reagents to be contained. A wide variety of pharmaceutical products and testing reagents are usable.

The present invention also provides a glass container containing a chemical wherein a pharmaceutical product or a testing reagent is contained in the medical glass container described above. When the pharmaceutical product or the like is administered, the pharmaceutical product contained in the glass container containing a chemical can be drawn up and administered with a syringe or the like. Alternatively, sterile water for injection can be poured into the glass container containing a chemical to prepare a liquid preparation such as a solution or a suspension before use, and the liquid preparation can be drawn up and administered with a syringe or the like.

## Examples

Examples and Comparative Examples are given below to illustrate the present invention in more detail; however, the present invention is not limited to these.

The following silane coupling agents and amorphous fluorine-containing resins were used for the experiments described below.

### Silane Coupling Agents

- Methyltrimethoxysilane (KBM-13, produced by Shin-Etsu Chemical Co., Ltd.)

- 3-aminopropyltriethoxysilane (KBE-903, produced by Shin-Etsu Chemical Co., Ltd.)

Amorphous Fluorine-containing Resins

- Teflon AF: tetrafluoroethylene/perfluorodioxole copolymer (TFE/PDD; Teflon AF 1600, Tg: 160°C). A 6% by weight solution of Teflon AF in a fluorine-containing solvent (HFE) (Teflon AF 1601 SOL FC, produced by Du Pont-Mitsui Fluorochemicals Co., Ltd.) was used.
- Cytop M: polymer in which the main chain comprises repeating units containing a perfluorotetrahydrofuran ring and that is terminated with a substituent containing a moiety represented by formula: $-CONH{\sim}Si(OEt)_3$ (Cytop M, produced by Asahi Glass Co., Ltd.)

Example 1

(1) Pretreatment with a Silane Coupling Agent

A silane coupling agent (KBE-903, 3-aminopropyltriethoxysilane) was diluted with purified water to prepare a solution in which the concentration of the silane coupling agent was 0.5% by weight. This solution was applied to the inner surface of a vial (inner capacity of 20 mL, made of borosilicate glass; same hereunder). The vial was drained by centrifugation and baked at 100°C for 30 minutes, thereby producing a vial treated with the silane coupling agent.

(2) Fluorine-containing Resin Coating

An amorphous fluorine-containing resin (Teflon AF) was diluted with a fluorine-containing inert liquid (Fluorinert FC-40, produced by Sumitomo 3M Limited) to prepare a solution in which the concentration of the amorphous fluorine-containing resin was 4%.
This solution was applied to the inner surface of the vial obtained in (1) above, which had been treated with the silane coupling agent. The resulting vial was drained by centrifugation and baked at 150°C for 20 minutes and at 250°C for 30 minutes, thereby producing an inner-surface-treated vial.
The upper portion of the body of the surface-treated vial was cut with an electric glass cutter, and a cut surface was observed with a microscope to measure the film thickness of the coating layer. The film thickness was 27 μm (see Fig. 4).

Example 2

An amorphous fluorine-containing resin (Cytop M) was diluted with a fluorine-containing inert liquid (Fluorinert FC-40, produced by Sumitomo 3M Limited) to prepare a solution in which the concentration of the amorphous fluorine-containing resin was 4%.
This solution was applied to the inner surface of the vial obtained in (1) of Example 1, which had been treated with the silane coupling agent. The resulting vial was drained by centrifugation and baked at 100°C for 20 minutes and at 250°C for 30 minutes, thereby producing an inner-surface-treated vial.

Example 3

(1) Pretreatment with a Silane Coupling Agent

A silane coupling agent (KBM-13, methyltrimethoxysilane) was diluted with purified water, and acetic acid was added thereto to adjust the pH to 4, thereby preparing a solution in which the concentration of the silane coupling agent was 2.0% by weight. This solution was applied to the inner surface of a vial. The vial was drained by centrifugation and baked at 200°C for 30 minutes, thereby producing a vial treated with the silane coupling agent.

(2) Fluorine-containing Resin Coating

An amorphous fluorine-containing resin (Teflon AF) was diluted with a fluorine-containing inert liquid (Fluorinert FC-40, produced by Sumitomo 3M Limited) to prepare a solution in which the concentration of the amorphous fluorine-containing resin was 1%.
This solution was applied to the inner surface of the vial obtained in (1) above, which had been treated with

the silane coupling agent. The resulting vial was drained by centrifugation and baked at 150°C for 20 minutes and at 250°C for 30 minutes, thereby producing an inner-surface-treated vial.

Example 4

An amorphous fluorine-containing resin (Cytop M) was diluted with a fluorine-containing inert liquid (Fluorinert FC-40, produced by Sumitomo 3M Limited) to prepare a solution in which the concentration of the amorphous fluorine-containing resin was 1%.

This solution was applied to the inner surface of the vial obtained in (1) of Example 3, which had been treated with the silane coupling agent. The resulting vial was drained by centrifugation and baked at 100°C for 20 minutes and at 180°C for 30 minutes, thereby producing an inner-surface-treated vial.

Comparative Example 1 (direct coating of an amorphous fluorine-containing resin)

A vial was directly treated with an amorphous fluorine-containing resin (Teflon AF) according to Example 1(2), without performing pretreatment with a silane coupling agent (Example 1(1)), thereby producing an inner-surface-treated vial.

Comparative Example 2 (silicone coating only)

A silicone emulsion (KM-740, dimethylpolysiloxane concentration of 35%, Shin-Etsu Chemical Co., Ltd.) was diluted with purified water to prepare a solution having a dimethylpolysiloxane concentration of 1%.

This solution was applied to the inner surface of an untreated vial, and the vial was drained by centrifugation and baked at 300°C for 30 minutes, thereby producing an inner-surface-treated vial.

Comparative Example 3 (untreated vial)

An untreated vial (inner capacity of 20 mL, borosilicate glass) was used.

Test Example 1

The surface-treated vials of the Examples and Comparative Examples (hereafter, referred to as coated vials) were subjected to the following tests. Tables 1 to 3 show the results of the tests.

(1) Evaluation of Appearance

The inner surface of each vial was observed with the naked eye under an inspection light for evaluation.

A: Transparent and no coating unevenness
B: Non-problematic partial coating unevenness and non-problematic partial opaqueness slightly observed
C: Substantial coating unevenness and opaque (whitening)

(2) Evaluation of Water Repellency

Purified water was poured into each coated vial, and the water repellency of the inner surface of the vial was evaluated with the naked eye.

A: Water repellency of the inner surface of the vial is uniform.
B: Water repellency of the inner surface of the vial is nearly uniform.
C: Water repellency of the inner surface of the vial is not uniform.

(3) Evaluation of Powder Repellency

A small amount of fine powder (mixed vitamin fine powder; particle diameter of about 1 to 30 μm) was placed in each coated vial, and adhesion of the fine powder to the inner surface of the vial was evaluated with the naked eye.

A: Almost no powder adheres to the inner surface of the vial.
B: Powder slightly adheres to the inner surface of the vial.

C: A large amount of powder adheres to the inner surface of the vial.

(4) Evaluation of Dry Heat Durability

A dry heat test was performed at 250°C for 30 minutes for each coated vial. The presence or absence of film peeling and the presence or absence of water repellency were evaluated after the test.

A: Good water repellency and no film peeling
B: Non-problematic film peeling and/or non-problematic poor water repellency slightly observed
C: Film peeling and poor water repellency

(5) Evaluation of Ultrasonic Cleaning Resistance (US resistance)

Each coated vial was ultrasonically treated in purified water under ultrasonic treatment conditions (using a 28-KHz washing apparatus) at 25°C for 40 seconds. The presence or absence of film peeling and the presence or absence of water repellency were evaluated after the test.

A: No increase in insoluble fine particles observed
B: Non-problematic increase in insoluble fine particles slightly observed
C: Increase in insoluble fine particles observed

(6) Evaluation of Hot-water Resistance

Purified water was poured into each coated vial, followed by heating at 121°C for 60 minutes. The presence or absence of film peeling and the presence or absence of water repellency were evaluated after the test.

A: Good water repellency and no film peeling
B: Non-problematic film peeling and/or non-problematic poor water repellency slightly observed.
C: Film peeling and poor water repellency

(7) Evaluation of Alkali Resistance

To purified water, 0.05 mol/L aqueous sodium hydroxide solution was added to adjust the pH to 9. The resulting solution was poured into each coated vial, followed by heating at 121°C for 60 minutes. The presence or absence of film peeling and the presence or absence of water repellency were evaluated after the test.

A: Good water repellency and no film peeling
B: Non-problematic film peeling and/or non-problematic poor water repellency slightly observed.
C: Film peeling and poor water repellency

(8) Evaluation of Concentration of Metals Eluted from the Glass

Purified water or a buffer (phthalate buffer, phosphate buffer, or borate buffer) was poured into each coated vial, followed by heating at 121°C for 60 minutes. The concentration of each metal ion (Na, B, Al, Si, Ca, and Ba) eluted from the inner surface of the vial into the test liquid was measured. Na was measured with an atomic absorption spectroscopy (AAS) device, and the other metals were measured with an inductively coupled plasma-atomic emission spectroscopy (ICP-AES) device. Table 3 shows the results. The units are ppm.

(9) Evaluation of Concentration of Fluorine Eluted from the Glass

Purified water was poured into each coated vial, followed by heating at 120°C for 60 minutes. The concentration of fluorine ion ($F^-$) eluted from the inner surface of the vial into the water was measured. Fluorine ion ($F^-$) was measured by ion chromatography. Table 4 shows the results. The units are ppm.

Table 1

| Vial | Film Properties | | |
|---|---|---|---|
| | (1) Appearance | (2) Water Repellency | (3) Powder Repellency |
| Example 1 | A | A | A |
| Example 2 | B | B | A |
| Example 3 | A | A | A |
| Example 4 | B | B | A |
| Comparative Example 1 | B | B | B |
| Comparative Example 2 | B | B | C: Poor Powder Repellency |
| Comparative Example 3 | - | C | C: Poor Powder Repellency |

Table 2

| Vial | Film Durability | | | |
|---|---|---|---|---|
| | (4) Dry Heat Durability at 250°C for 30 Minutes | (5) Ultrasonic Cleaning Resistance at 25°C for 40 Seconds | (6) Hot-water Resistance at 121°C for 60 Minutes | (7) Alkali Resistance at 121°C for 60 Minutes |
| Example 1 | A | A | A | A |
| Example 2 | B | B | B | B |
| Example 3 | A | A | A | A |
| Example 4 | B | B | B | B |
| Comparative Example 1 | B | C | C | C |
| Comparative Example 2 | B | B | C | C |
| Comparative Example 3 | - | - | - | - |

Table 3

| | Vial | (8) Concentration of Metal Eluted from Glass ppm (average of n= 5) | | | | | |
|---|---|---|---|---|---|---|---|
| | | Na | B | Al | Si | Ca | Ba |
| Purified Water pH = 6.5 | Example 1 | 0 | 0.05 | 0 | 0 | 0 | 0 |
| | Example 2 | 0 | 0.08 | 0 | 0 | 0 | 0 |
| | Comparative Example 1 | 0.11 | - | - | - | - | - |
| | Comparative Example 2 | 0.40 | 0.60 | 0 | 1.24 | 0 | 0.01 |
| | Comparative Example 3 | 0.32 | 0.50 | 0 | 0.57 | 0 | 0 |
| Phthalate Buffer pH = 4.01 | Example 1 | 0 | 0.03 | 0 | 0 | 0 | 0 |
| | Comparative Example 3 | 0.5 | 0.61 | 0.04 | 0.25 | 0.09 | 0.23 |

(continued)

| | Vial | (8) Concentration of Metal Eluted from Glass ppm (average of n= 5) | | | | | |
|---|---|---|---|---|---|---|---|
| | | Na | B | Al | Si | Ca | Ba |
| Phosphate Buffer pH = 6.86 | Example 1 | - | 0 | 0 | 0 | 0 | 0 |
| | Comparative Example 3 | - | 1.12 | 0.19 | 4.09 | 0.12 | 0.11 |
| Borate Buffer pH = 9.18 | Example 1 | - | - | 0 | 0 | 0 | 0 |
| | Comparative Example 3 | - | - | 1.39 | 13.58 | 0.22 | 0.48 |

Table 4

| | Vial | (9) Concentration of Fluorine Eluted from Glass ppm (average of n = 3) |
|---|---|---|
| Purified Water pH = 6.5 | Example 1 | Less than Detection Limit (0.022) |
| | Comparative Example 2 | Less than Detection Limit (0.012) |
| | Comparative Example 3 | Less than Detection Limit (0.030) |
| The detection limit is 0.050 ppm. | | |

Tables 1 to 3 show that the vials in Examples 1 to 4 achieved excellent effects (such as water repellency, powder repellency, heat resistance, water resistance, and alkali resistance) since each vial was coated with a predetermined silane coupling agent and a predetermined amorphous fluorine-containing resin. The results reveal that these effects are notably excellent in particular when Teflon AF is used as an amorphous fluorine-containing resin.

In contrast, it was confirmed that hot-water resistance and alkali resistance were poor and the concentration of each metal eluted from glass rose when the glass surface was directly coated with the amorphous fluorine-containing resin without treatment with a silane coupling agent (Comparative Example 1).

It was confirmed that hot-water resistance and alkali resistance were very poor and the concentration of each metal eluted from glass became extremely high in the untreated vial (Comparative Example 3) and the conventional vial treated with silicone (Comparative Example 2).

Table 4 shows that although the vial of Example 1 was coated with the fluorine-containing resin, the eluted fluorine ion was below the detection limit.

Test Example 2

The following were evaluated for the adhesion strength of the coating film: the surface-treated vial (coated vial 1) in Example 1, a vial obtained by subjecting the surface-treated vial in Example 1 to "(4) Evaluation of Dry Heat Durability" in Test Example 1 (coated vial 2), and a vial obtained by subjecting the surface-treated vial in Example 1 to the same treatment as with the vial subjected to "(4) Evaluation of Dry Heat Durability" and further subjecting the resulting vial to moist heat sterilization at 121°C for 20 minutes (coated vial 3).

The lower portion of the body of each of coated vials 1 to 3 was cut to obtain a cut piece of the bottom portion of the vial. Cellophane tape (Cellotape CT-15S produced by Nichiban, 15 mm wide) was attached to the inner surface (coated surface) of the cut piece of the bottom portion of each vial, and then rapidly peeled off all at once in a direction perpendicular to the surface of the bottom portion while holding an edge of the cellophane tape.

Water droplets were dropped on the cut piece of each of coated vials 1 to 3 after the above treatment, and the contact angle was measured with a contact angle meter (CAX-150 (FAMAS) produced by Kyowa Interface Science Co., Ltd.). Fig. 5 shows the results. The contact angle of coated vial 1 immediately after production was 114.6°. The contact angles of coated vials 1 to 3 after being subjected to the above peeling with the cellophane tape were 116.2°, 118.8°, and 119.5°, respectively.

As described above, there was almost no difference in the contact angle of the coated vials. Thus, it was confirmed that compared to coated vial 1, there was almost no difference in the adhesion strength of the film in the vial

that had been subjected to "(4) Evaluation of Dry Heat Durability" (coated vial 2) and the vial that had been subjected to the same treatment as with the vial subjected to "(4) Evaluation of Dry Heat Durability" and that further had been subjected to moist heat sterilization at 121°C for 20 minutes (coated vial 3).

Test Example 3

The surface-treated vial of Example 1 (coated vial 1) was evaluated for the impact resistance of the coating film.

After the weight of empty coated vial 1 was measured, about 15 ml of 70% aqueous granulated sugar solution was poured into the vial, and the weight of the vial was measured. All of the aqueous granulated sugar solution was drawn up with a syringe with a needle, and then the weight of the vial was measured (n=5). The amount of the aqueous granulated sugar solution adhered to the vial was 0.015 g, which was obtained by finding the difference between the weight of the empty vial and the weight measured after all of the aqueous granulated sugar solution was drawn up.

2.5 g of glass beads (diameter: 1.5 to 2.5 mm) was placed into coated vial 1, and the vial was sealed with a rubber stopper. The bottom portion of the body of the vial was hit against the palm of the tester's hand 50 times while holding the neck portion of the vial. The glass beads were removed, and the vial was washed with water and dried. After the weight of the empty vial was measured, about 15 ml of 70% aqueous granulated sugar solution was poured into the vial, and the weight of the vial was measured. All of the aqueous granulated sugar solution was drawn up with a syringe with a needle, and then the weight of the vial was measured. The amount of the aqueous granulated sugar solution adhered to the vial was 0.014 g, which was obtained by finding the difference between the weight of the empty vial and the weight measured after all of the aqueous granulated sugar solution was drawn up.

The above results confirm that there was no damage to the film on the inner surface of the vial since there was no change in the adhesion amount of the aqueous granulated sugar solution regardless of impact of glass beads. This fact reveals that coated vial 1 has impact resistance at a level that is practically no problem as a medical glass container.

Test Example 4

The vials in Example 1, Comparative Example 2, and Comparative Example 3 were evaluated for the protein adsorption of the coating film.

A $5\times10^{-3}$ (amino acid) mol/l (nearly equal to 0.56 mg/ml) sample was prepared using albumin that is derived from bovine serum and contains no globulin (BSA)(number of amino acid residues: 607, molecular weight: 69.293, average amino acid molecular weight: M is nearly equal to 114) and 0.1 M citric acid buffer solution having a pH of 6.2.

15.6 ml of the sample was poured into each vial. The vial was sealed with a rubber stopper and allowed to stand at 5°C for 7 days. (The area of contact between the sample and the inner surface of the vial was 28.8 $cm^2$.) Thereafter, the absorbance ($ABS_{280}$) of each sample at the start of the test and after 7 days was measured with a spectrophotometer (produced by JASCO Corporation, V-560) to calculate the percentage of BSA remaining in each sample.

Before the above measurement, BSA solutions of a) $5.253\times10^{-3}$(amino acid) mol/l, b) $2.122\times10^{-3}$(amino acid) mol/l, c) $1.599\times10^{-3}$(amino acid) mol/l, d) $1.052\times10^{-3}$(amino acid) mol/l, e) $0.839\times10^{-3}$(amino acid) mol/l, and f) $0.526\times10^{-3}$(amino acid) mol/l were prepared, and the absorbance was measured in a manner similar to the above to make a calibration curve, with which the molar extinction coefficient of each BSA solution was determined (Fig. 6).

Fig. 7 shows the results of measuring absorbance of the respective samples in the vials of Example 1, Comparative Example 2, and Comparative Example 3. The percentage of BSA remaining in each sample is shown in Table 5 and Fig. 8.

$$\text{Percentage of BSA remaining (\%)} = \text{(concentration after 7 days)}/\text{(concentration in the sample at the start of the test)} \times 100$$

The results confirm that the protein adsorption amount was reduced in the vial of Example 1 compared to the vials of Comparative Examples 2 and 3.

Table 5

| | Concentration of BSA in Sample (at the Start of the Test) | Concentration of BSA after Storage at 5°C for 7 days | Percentage Remaining |
|---|---|---|---|
| Comparative Example 3 | 5.148 | 4.907 | 95.3% |
| Comparative Example 2 | | 4.906 | 95.3% |
| Example 1 | | 4.982 | 96.8% |
| BSA concentration: $\times 10^{-3}$ (amino acid) mol/l | | | |

## Claims

1. A method for producing a glass container, the method comprising the steps of:

   (1) treating the inner surface of a glass container with a silane coupling agent and/or a partial hydrolysate thereof; and
   (2) treating the treated surface obtained in step (1) with an amorphous fluorine-containing resin.

2. The method according to claim 1, wherein the silane coupling agent is a compound represented by formula (A):

   $$(R^1O)_{4-n}SiR^2_n \qquad (A)$$

   wherein n represents 1, 2, or 3, $R^1$ represents a lower alkyl group, and $R^2$ represents a lower alkyl group that may be substituted with an amino group or an amino-lower alkylamino group.

3. The method according to claim 2, wherein the silane coupling agent is a compound represented by formula (A), wherein n represents 1, $R^1$ represents a $C_{1-3}$ alkyl group, and $R^2$ represents a $C_{2-6}$ alkyl group that may be substituted with an amino group or an amino-$C_{2-4}$ alkylamino group.

4. The method according to any one of claims 1 to 3, wherein the amorphous fluorine-containing resin comprises repeating units of a fluorine-containing cyclic ether structure.

5. The method according to claim 4, wherein the amorphous fluorine-containing resin comprises repeating units represented by formula (B):

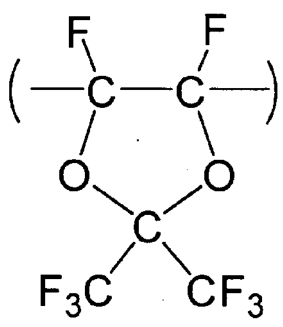

(B)

6. The method according to claim 5, wherein the amorphous fluorine-containing resin comprises 60 to 99 mol% repeating units represented by formula (B) and 40 to 1 mol% repeating units represented by formula (B1):

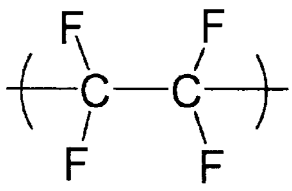

(B1)

7. The method according to claim 4, wherein the amorphous fluorine-containing resin comprises repeating units represented by formula (C) and/or formula (D):

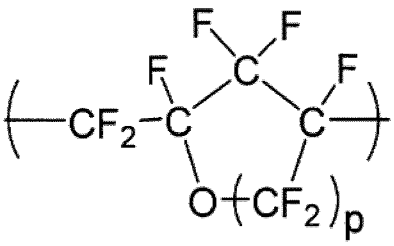

and/or

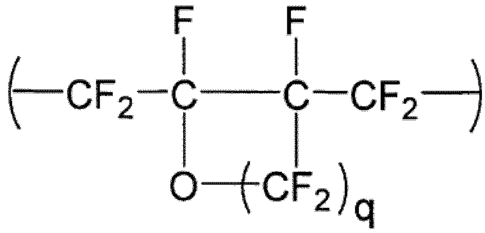

(C) (D)

wherein p represents 1 or 2, and q represents 1 or 2.

8. The method according to claim 7, wherein the amorphous fluorine-containing resin comprising repeating units represented by formula (C) and/or formula (D) has one or more carboxyl-containing substituents, or one or more substituents containing a moiety represented by formula (E):

$$-CONH-R^3-Si(OR^4)_3 \quad (E)$$

wherein $R^3$ represents a linker, and $R^4$ represents a lower alkyl group.

9. The method according to claim 8, wherein the amorphous fluorine-containing resin comprising repeating units represented by formula (C) and/or formula (D) is terminated with a substituent containing a moiety represented by formula (E).

10. A glass container obtained by the method according to any one of claims 1 to 9.

11. The glass container according to claim 10, which is a medical glass container.

12. A medical glass container containing a chemical, wherein a pharmaceutical product or a testing reagent is contained in the medical glass container according to claim 11.

Fig. 1

(a) Water repellency of the inner surface of the vial is uniform.

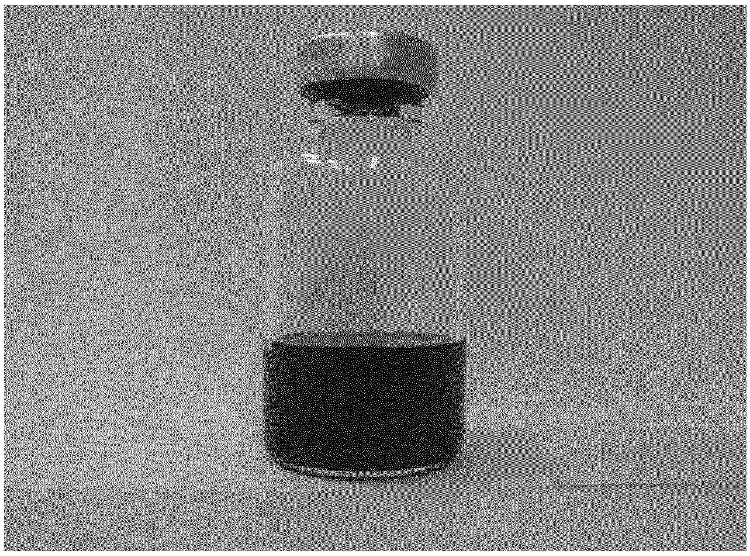

(b) Water repellency of the inner surface of the vial is not uniform.

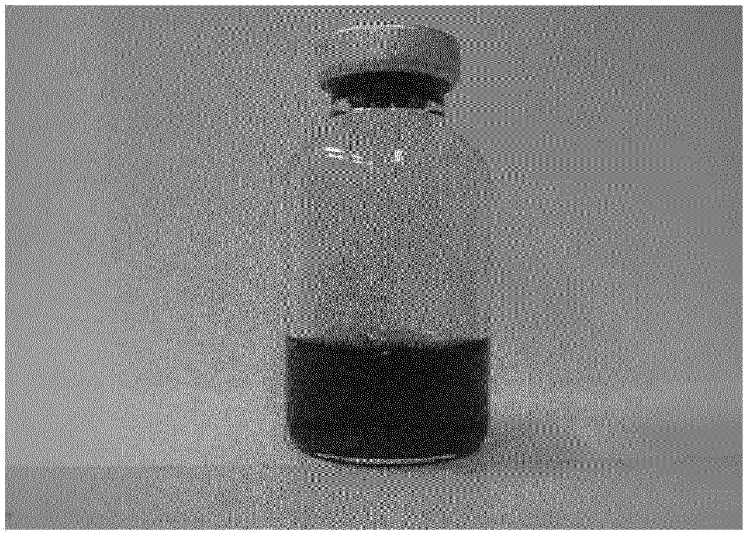

Fig. 2

(a) Almost no powder adheres to the inner surface of the vial.

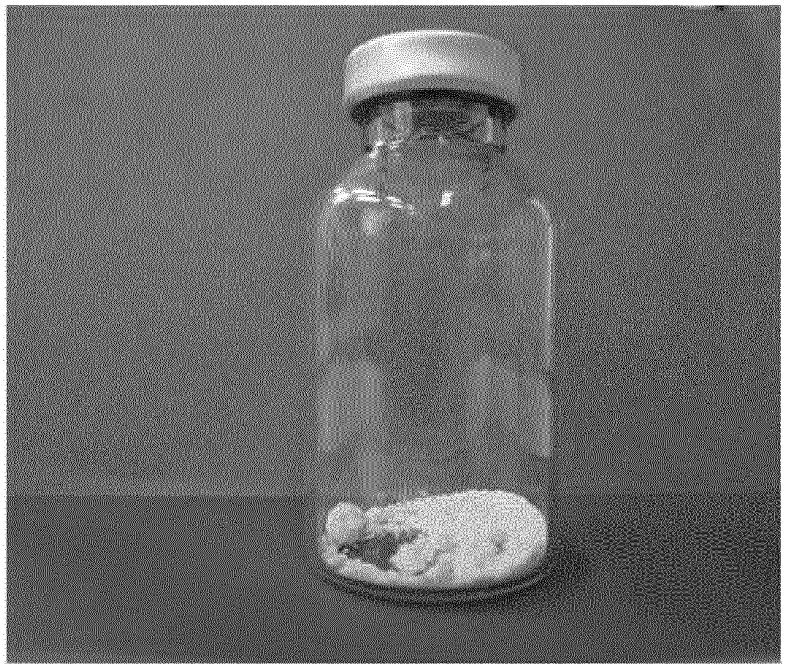

(b)A large amount of powder adheres to the inner surface of the vial.

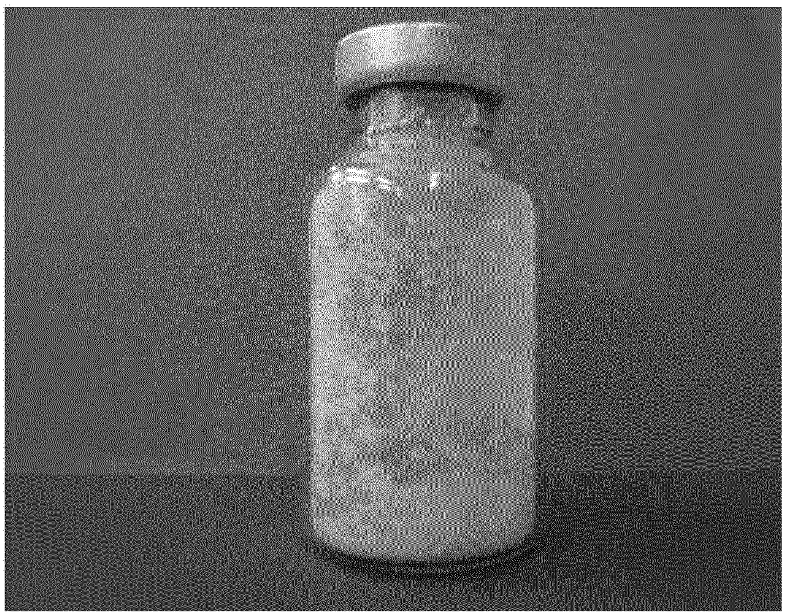

Fig. 3-1

(a) No film peeling

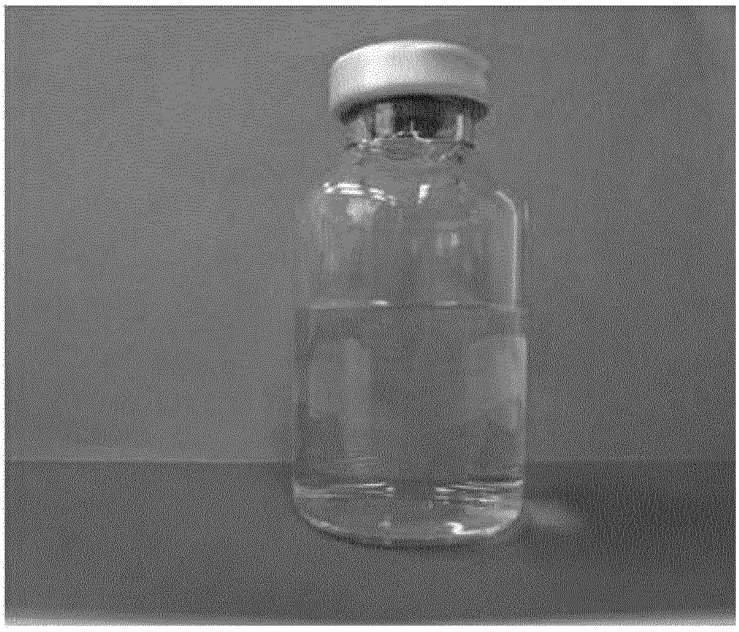

(b) Film peeling

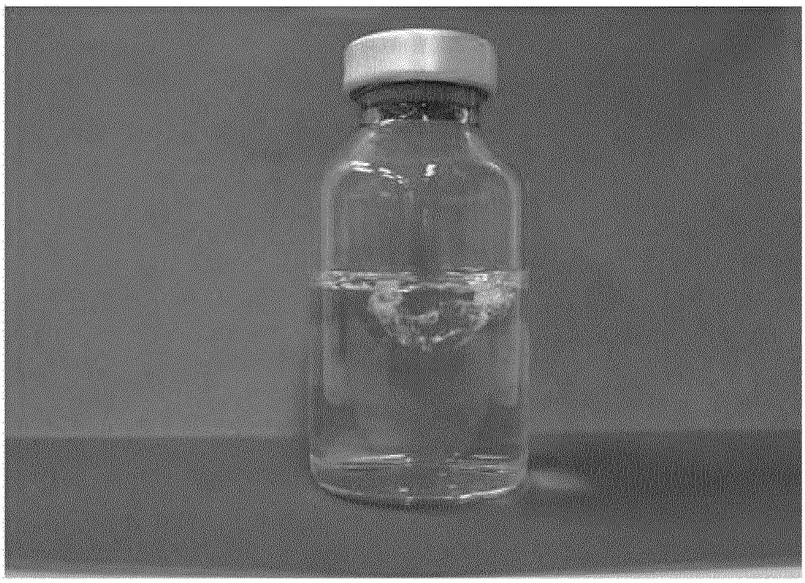

Fig. 3-2

(c) Good water repellency

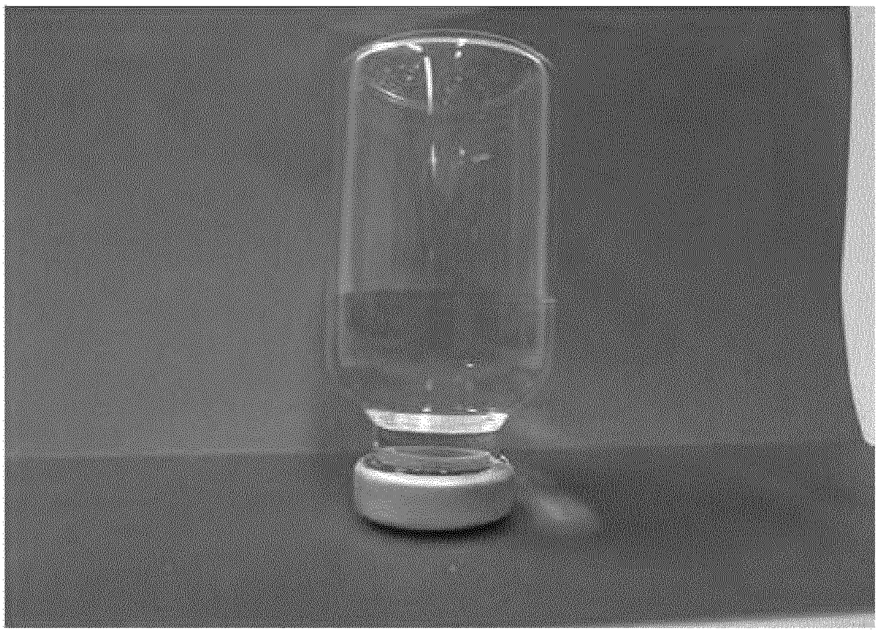

(d) Poor water repellency

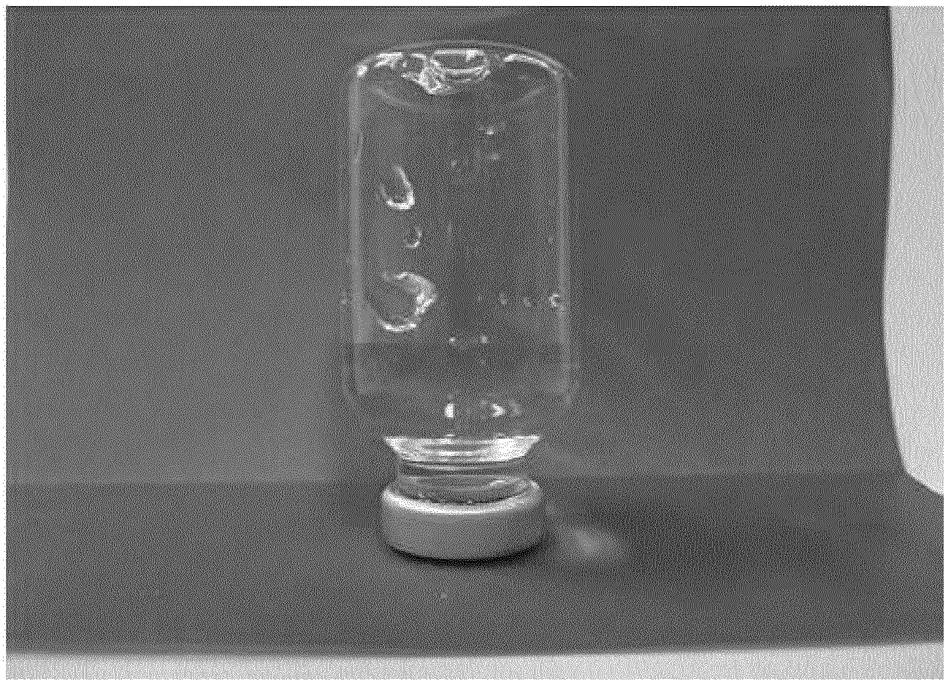

Fig. 4

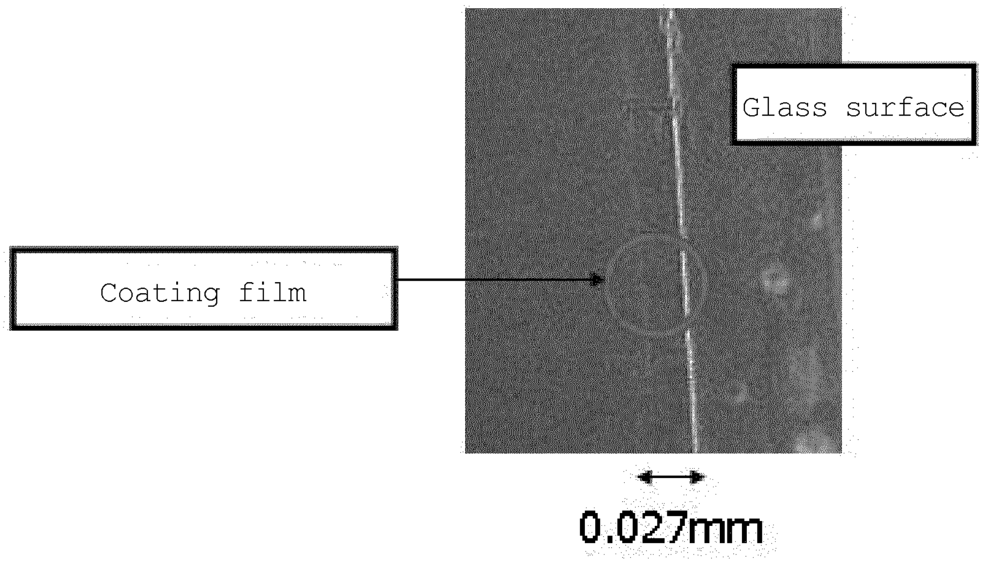

Fig. 5

(a) Surface-treated vial of Example 1 (coated vial 1)

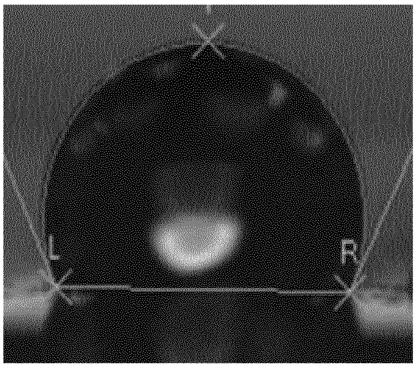


Contact angle
114.6°

(b) After subjecting coated vial 1 to peeling

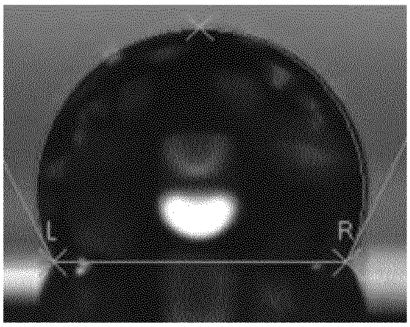


Contact angle
116.2°

(c) After subjecting coated vial 2 to peeling

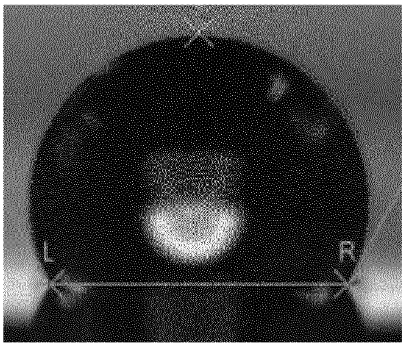


Contact angle
118.8°

(d) After subjecting coated vial 3 to peeling

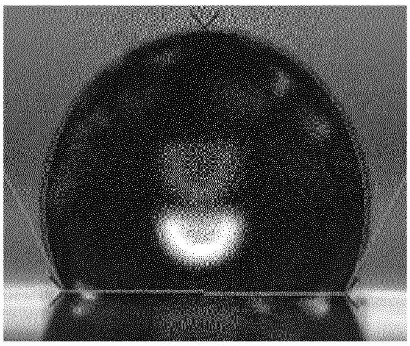

Contact angle
119.5°

Fig. 6

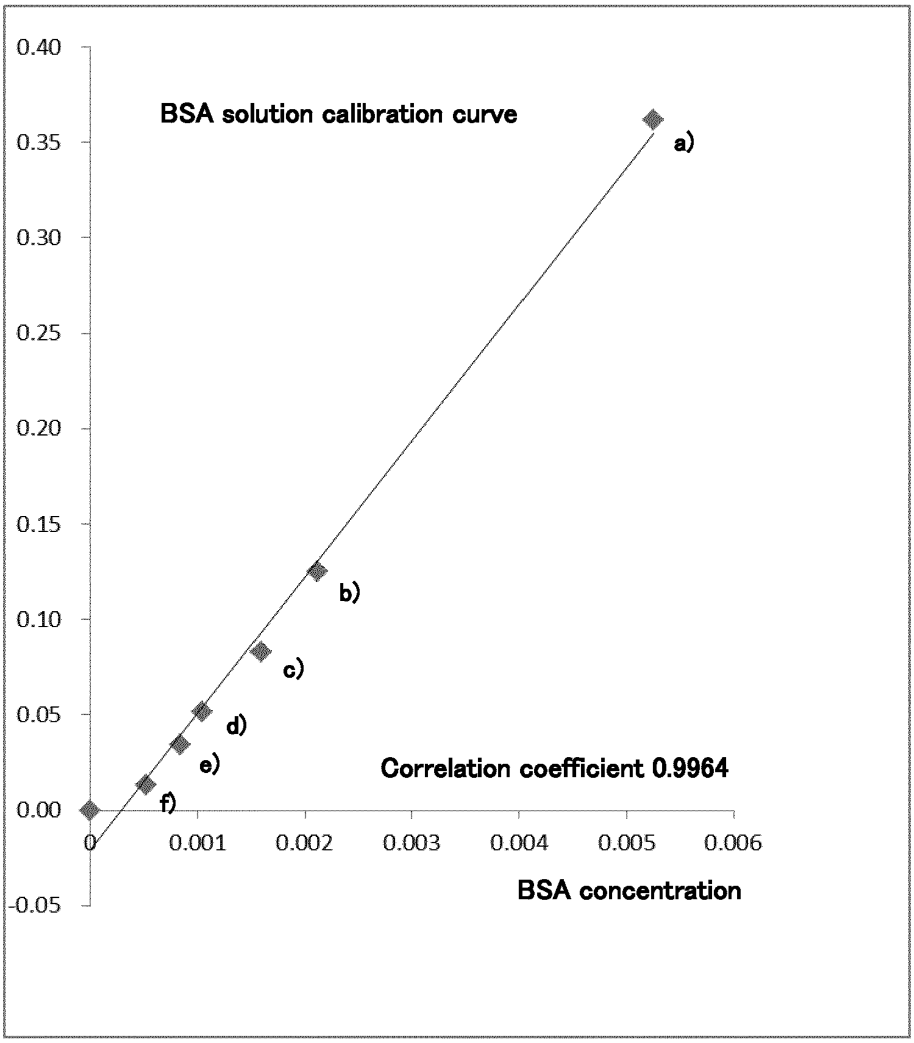


Lambert-Beer's law

$A_{280}$ = ε × concentration × l [optical path length: 1 cm]

ε [molar extinction coefficient] → 71.434

(in terms of amino acid)

Fig. 7

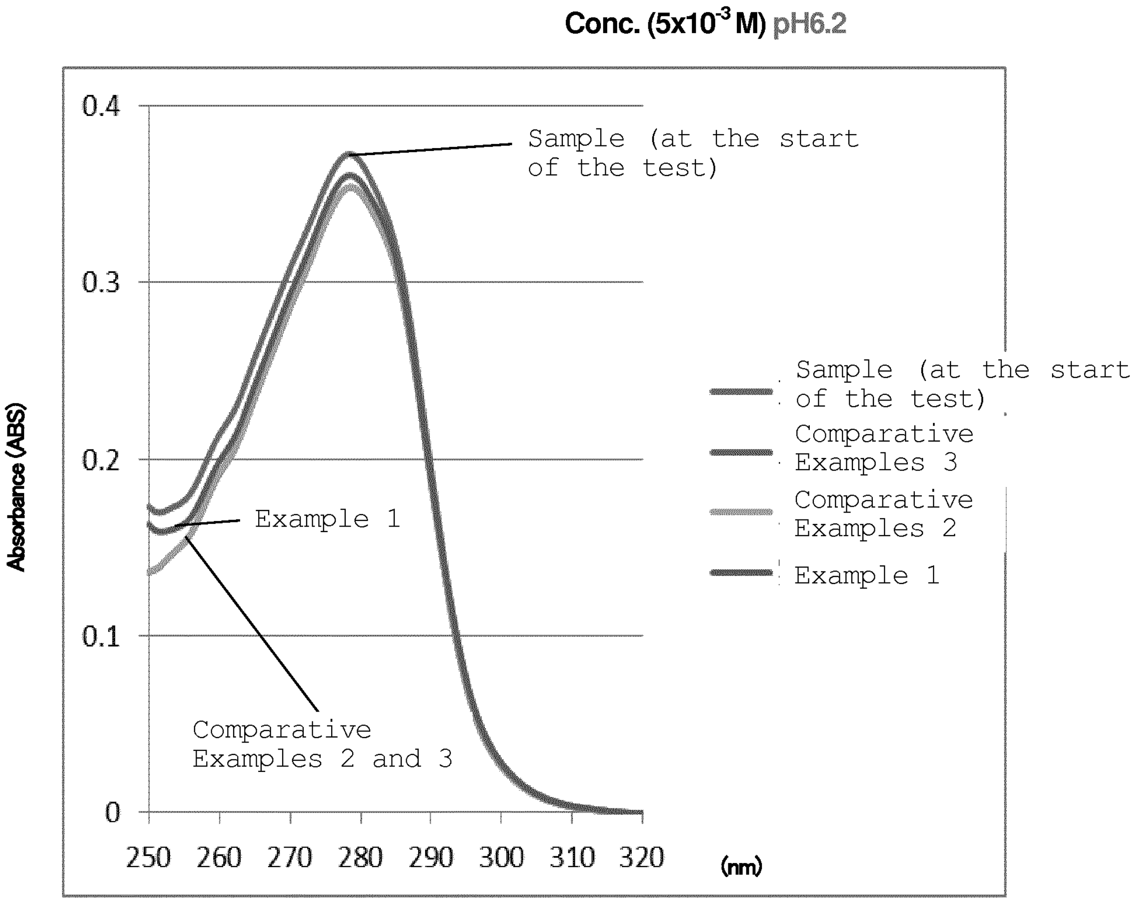
Conc. ($5x10^{-3}$ M) pH6.2
Absorbance (ABS)
0.4
0.3
0.2
0.1
0
250
260
270
280
290
300
310
320
(nm)
Sample (at the start of the test)
Example 1
Comparative Examples 2 and 3
Sample (at the start of the test)
Comparative Examples 3
Comparative Examples 2
Example 1

Fig. 8

$$\text{Percentage of BSA remaining} = \frac{\text{Concentration after 7 days}}{\text{Concentration in the sample at the start of the test}} \times 100$$

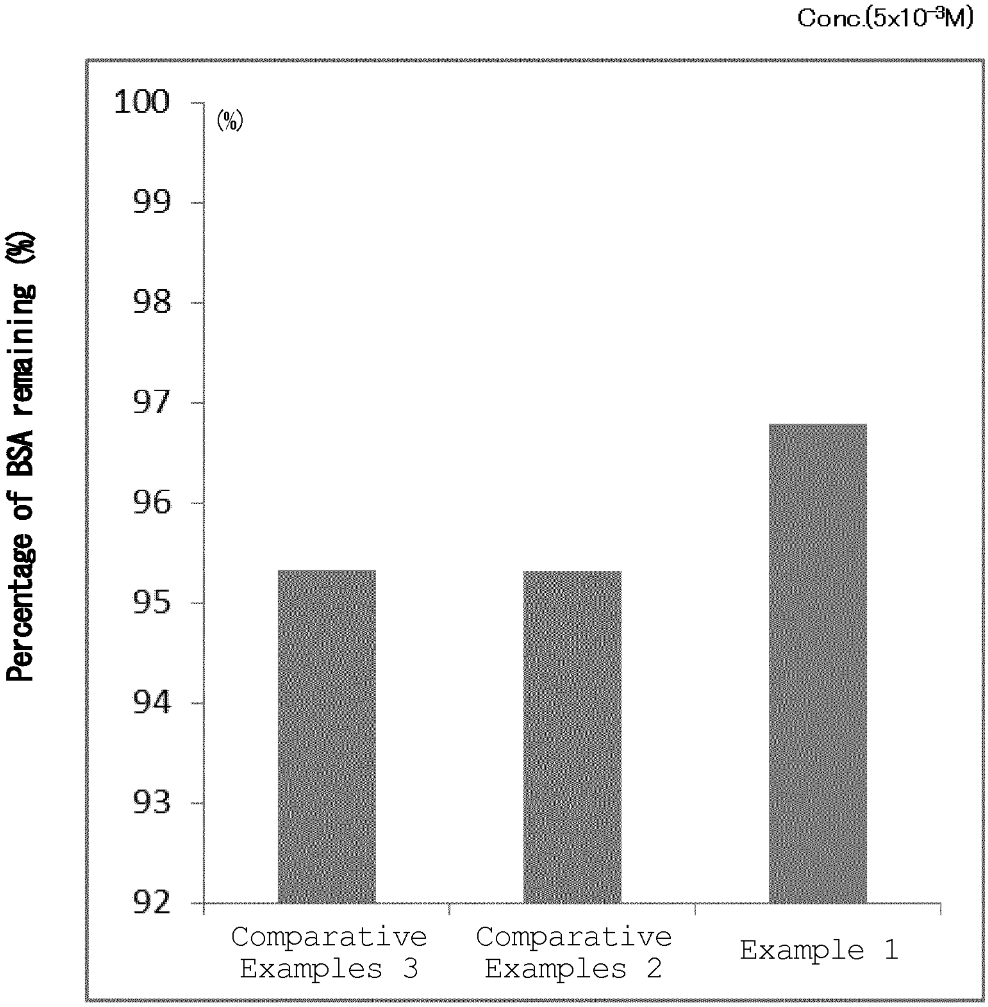

**INTERNATIONAL SEARCH REPORT**

International application No. PCT/JP2012/080475

A. CLASSIFICATION OF SUBJECT MATTER
*C03C17/42*(2006.01)i, *A61J1/05*(2006.01)i

According to International Patent Classification (IPC) or to both national classification and IPC

B. FIELDS SEARCHED

Minimum documentation searched (classification system followed by classification symbols)
C03C15/00-25/06, A61J1/05, G02B1/10-1/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-350770 A (Carl-Zeiss-Stiftung), 19 December 2000 (19.12.2000), claims; paragraph [0009] & US 2003/0134060 A1 & EP 1050517 A1 & DE 19921303 C & DE 299023238 U & DE 50000581 D & DE 299023238 U1 & HK 1032776 A | 1-12 |
| Y | JP 10-311902 A (Canon Inc.), 24 November 1998 (24.11.1998), claims; paragraphs [0016], [0022] to [0028]; examples; tables 1 to 3 (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>18 February, 2013 (18.02.13) | Date of mailing of the international search report<br>26 February, 2013 (26.02.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2012/080475

C (Continuation). DOCUMENTS CONSIDERED TO BE RELEVANT

| Category* | Citation of document, with indication, where appropriate, of the relevant passages | Relevant to claim No. |
|---|---|---|
| Y | JP 03-195757 A (Asahi Glass Co., Ltd.), 27 August 1991 (27.08.1991), claims; page 2, lower left column, line 13 to page 4, lower right column, line 5; page 4, lower right column, line 16 to page 5, lower left column, line 2; examples; table 1 (Family: none) | 2-7,10-12 |
| Y | JP 04-226177 A (Asahi Glass Co., Ltd.), 14 August 1992 (14.08.1992), claims; paragraphs [0009] to [0070]; synthesis examples & US 5510406 A & EP 460523 A1 & DE 69111699 C | 8,9,10-12 |
| A | JP 09-288202 A (Fukuvi Chemical Industry Co., Ltd.), 04 November 1997 (04.11.1997), claims; paragraphs [0030] to [0044]; examples (Family: none) | 1-12 |
| A | JP 2005-189296 A (Topcon Corp.), 14 July 2005 (14.07.2005), claims; examples; fig. 2 (Family: none) | 1-12 |
| A | JP 2005-268759 A (Nikon Corp.), 29 September 2005 (29.09.2005), claims; paragraphs [0150] to [0152] & US 2007/0115450 A1 & US 2007/0242242 A1 & EP 1699072 A1 & WO 2005/055296 A1 & CN 1890779 A & SG 148993 A & IL 176057 D & CN 102163004 A & CN 102163005 A & IL 207788 D & IL 207790 A & KR 10-2011-0132453 A & TW 201220000 A & KR 10-2012-0115593 A | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008006587 A
- JP 2011523866 A
- JP 2815595 B
- JP 2615176 B
- JP 2713867 B
- JP 2981185 B
- JP 3137609 B
- JP 2003514956 A
- WO 01037044 A